(19) Europäisches Patentamt / European Patent Office / Office européen des brevets

(11) **EP 3 985 591 A2**

(12) **EUROPEAN PATENT APPLICATION**
published in accordance with Art. 153(4) EPC

(43) Date of publication:
**20.04.2022 Bulletin 2022/16**

(21) Application number: **20823422.9**

(22) Date of filing: **11.06.2020**

(51) International Patent Classification (IPC):
*G06Q 30/02* (2012.01)   *G06F 16/904* (2019.01)
*G06Q 50/00* (2012.01)   *G06Q 50/30* (2012.01)

(52) Cooperative Patent Classification (CPC):
**G06Q 30/0205; G06F 16/9535; G06Q 30/0201;**
**G06Q 30/0282; G06Q 50/01**

(86) International application number:
**PCT/KR2020/007595**

(87) International publication number:
**WO 2020/251282 (17.12.2020 Gazette 2020/51)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **11.06.2019 KR 20190068979**

(71) Applicant: **Lee, Hyunhwan**
**Incheon 21654 (KR)**

(72) Inventors:
• **JOHNSON, Joseph**
**Coral Gables, Florida 33124 (US)**
• **TELLIS, Gerard**
**Los Angeles, California 90089 (US)**
• **LEE, Hyunhwan**
**Incheon 21654 (KR)**

(74) Representative: **Zacco Sweden AB**
**P.O. Box 5581**
**114 85 Stockholm (SE)**

(54) **PREFERENCE EVALUATION METHOD AND SYSTEM**

(57) Disclosed are a preference evaluation method and system. The preference evaluation method and system according to an embodiment of the present invention include: a step for generating preference evaluation result data and an evaluation result map by detecting and analyzing, in an evaluation server, big data uploaded through a communication terminal device and constructed in a database server of Social Network Services/Sites (SNS) and internet sites; and a step for supporting a user so that the user can download the preference evaluation result data and the evaluation result map of the evaluation server through an internet network and confirm the same through a monitor of a user terminal device. The preference evaluation method and system make it possible to overcome various restrictions and limitations by evaluating and tracking preferences for and influences of specific objects, such as brands, products, or people, over time and by region.

【FIG. 1】

**Description**

**Field**

The present disclosure relates to a method and a system for preference evaluation that enables evaluation and tracking of a preference and an influence of a specific object such as a brand, a product, or a person temporally and regionally.

**Description of Related Art**

Generally, because demographics, income, competitiveness, and brand investment vary regionally, specific objects such as brands, products, or persons will compete with each other to increase market share thereof with considering regional characteristics.

Consumers may have different associations with specific brands or products depending on regional characteristics. Therefore, the product or brand may have a strong or weak influence on a market in a specific local region. Therefore, sellers of specific brands or products should evaluate preferences and influences thereof in various local regions and conduct appropriate marketing based on the evaluations.

This is true of a person. For example, a politician may have a strong or weak influence on a specific local region. That is, preference and influence thereof may vary based on a local region. Thus, the preference and influence thereof should be evaluated based on a voting region or regional characteristics thereof to ensure proper strategy.

In this connection, a conventional preference and influence evaluation scheme may include questionnaire survey, a scanner panel data construction method, Amazon Quick Sight, Google Analytics, etc. However, in fact, the conventional preference and influence evaluation method has many limitations and limitations temporally or regionally.

Specifically, the Amazon Quick Sight and Google Analytics methods may build evaluation data in a broadly specified time zone and in a broad local region range but have limitations such as inability to provide data about competitors of products or brands other than specific products or brands.

Further, the scanner panel data construction method could only be applied to limited sample categories, limited stores, and limited local regions. The questionnaire survey method is conducted based on household surveys, and has limitations such as limited election groups and ages, thereby to cause a high error level and inability to perform evaluation at a micro level.

**DISCLOSURE**

TECHNICAL **PURPOSES**

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter.

A purpose of the present disclosure is to provide a preference evaluation method and a preference evaluation system which enables evaluation and tracking of a preference and an influence of a specific object such as a brand, a product, or a person temporally and regionally, thereby to overcome various limitations as described above.

In particular, a purpose of the present disclosure is to provide a preference evaluation method and a preference evaluation system in which data about various posted contents are detected through various social network services (SNSs) such as Twitter, and a weight is imparted to temporal and regional analysis characteristics thereof in the evaluation of a preference and a influence of a corresponding object.

In addition, a purpose of the present disclosure is to provide a preference evaluation method and a preference evaluation system in which a validity of preference and influence evaluation results is checked and the validity is displayed as a result map such that a user may clearly and easily recognize more accurate result data.

Purposes in accordance with the present disclosure are not limited to the above-mentioned purpose. Other purposes and advantages in accordance with the present disclosure as not mentioned above may be understood from following descriptions and more clearly understood from embodiments in accordance with the present disclosure. Further, it will be readily appreciated that the purposes and advantages in accordance with the present disclosure may be realized by features and combinations thereof as disclosed in the claims.

**TECHNICAL SOLUTION**

According to a first aspect of the present disclosure, a preference evaluation method includes detecting and analyzing, by an evaluation server, posted contents uploaded to a social network service (SNS) site through a communication device, and big data built in a database server of an Internet site, and creating, by the evaluation server, preference evaluation result data and an evaluation result map, based on the detecting and analyzing results; and downloading, by an user device, the preference evaluation result data and the evaluation result map from the evaluation server, through an Internet network, such that a user of the user device checks the preference evaluation result data and the evaluation result map on a display of the user device.

In one implementation of the first aspect, detecting and analyzing the posted contents and the big data and creating the preference evaluation result data include: searching, by a data detection unit of the evaluation server, for the posted contents and the big data through the Internet network, and detecting, by the data detection unit, posted data on a predetermined object, wherein the object includes at least one of a brand, a product, or a person; extracting, by a text analysis unit of the evaluation server , application programming interface data (API data) and text data of the detected posted data; analyzing, by a position information analysis unit of the evaluation server, the extracted API data and text data and, extracting position-related information therefrom; using, by a local region information analysis unit of the evaluation server, the position-related information to classify the extracted API data based on a local region; analyzing, by a time information analysis unit of the evaluation server, the extracted API data and text data to extract date and time-related information; using, by the time information analysis unit, the date and time-related information to classify the extracted API data and text data based on a time-zone; analyzing, by a weight setting unit of the evaluation server, the API data and text data classified based on the local region and based on the time-zone to obtain a weight corresponding thereto, and applying the obtained weight to the corresponding API data and text data; and evaluating, by a preference evaluation unit of the evaluation server, a preference and a influence of the object based on the weighed API data and text data.

In one implementation of the first aspect, creating the evaluation result map includes: arranging, by a result map creation unit of the evaluation server, the weighted API data and text data, based on the local region and the time-zone; and identifying, by a validity checking unit of the evaluation server, consumption or sales of the object based on the local region and the time-zone, and comparing the identified consumption or sales with the preference evaluation result of the object, and verifying a validity of the preference evaluation result based on the comparison result.

In one implementation of the first aspect, classifying the extracted API data and text data based on the time-zone includes using the date and time-related information to rearrange the extracted API data and text data based on the time-zone, and storing the rearranged API data and text data.

In one implementation of the first aspect, evaluating the preference and the influence of the object includes: modeling a weight size and a weight distribution of the API data and text data classified based on the local region and position information on Gaussian space coordinates; determining and evaluating a regional influence of the object based on a position-based height and a curve shape modeled on the Gaussian spatial coordinates; and monitoring a regional influence evaluation result of the API data and text data based on a temporal variation.

According to a second aspect of the present disclosure, a preference evaluation system includes an evaluation server configured to detect and analyze posted contents uploaded to a social network service (SNS) site through a communication device, and big data built in a database server of an Internet site, and to create preference evaluation result data and an evaluation result map, based on the detecting and analyzing results; and an user device configured to download the preference evaluation result data and the evaluation result map from the evaluation server, through an Internet network, such that a user of the user device checks the preference evaluation result data and the evaluation result map on a display of the user device.

In one implementation of the second aspect, the evaluation server includes: a data detection unit configured to search for the posted contents and the big data through the Internet network, and to detect posted data on a predetermined object, wherein the object includes at least one of a brand, a product, or a person; a text analysis unit configured to extract application programming interface data (API data) and text data of the detected posted data; a position information analysis unit configured to analyze the extracted API data and text data and to extract position-related information therefrom; a local region information analysis unit configured to use the position-related information to classify the extracted API data based on a local region; a time information analysis unit configured to analyze the extracted API data and text data, to extract date and time-related information therefrom, and to use the date and time-related information to classify the extracted API data and text data based on a time-zone; a weight setting unit configured to analyze the API data and text data classified based on the local region and based on the time-zone to obtain a weight corresponding thereto, and to apply the obtained weight to the corresponding API data and text data; and a preference evaluation unit configured to evaluate a preference and a influence of the object based on the weighed API data and text data.

In one implementation of the second aspect, the evaluation server further includes: a result map creation unit configured to arrange the weighted API data and text data, based on the local region and the time-zone to create the preference evaluation result map; and a validity checking unit configured to identify consumption or sales of the object based on the local region and the time-zone, to compare the identified consumption or sales with the preference evaluation result of the object, and to verify a validity of the preference evaluation result based on the comparison result.

In one implementation of the second aspect, the position information analysis unit is configured to: detect position data including coordinate information based on position information and a region name indicated in an user profile, using a geocoding algorithm and a library program of Python; extract local region and position-related information based on the detected coordinate information; sort the extracted local region and position-related information based on a frequency at which the information is extracted; and store the sorted information.

In one implementation of the second aspect, the weight setting unit is configured to: analyze at least one of a number of friends associated with a creator of each of posted contents associated with the API data and text data classified based on the local region and position information, a number of followers of the creator, a number of recommendations of the posted contents, or a number of Likes thereof and then calculate a first weight based on the analysis result; analyze at least one of a number of friends associated with a creator of each of posted contents associated with the API data and text data classified based on the date and time zone, a number of followers of the creator, a number of recommendations of the posted contents, or a number of Likes thereof and then calculate a second weight based on the analysis result; add the first weight to the local region and position-based API data and text data; and add the second weight to the date and time zone- based API data and text data.

Effects in accordance with the present disclosure may be as follows but may not be limited thereto.

**TECHNICAL EFFECT**

The preference evaluation method and system according to the embodiment of the present disclosure having various technical features as described above may enable evaluation and tracking of the preference and the influence of the specific object such as a brand, a product, or a person temporally and regionally, thereby to overcome various limitations and improve evaluation accuracy and reliability thereof.

Further, in the preference evaluation method and system according to the embodiment of the present disclosure having various technical features as described above, the data about various posted contents are detected through the various social network services (SNSs) such as Twitter and, a weight is imparted to temporal and regional analysis characteristics thereof in the evaluation of the preference and the influence of a corresponding object. Accordingly, more accurate analysis results may be achieved by extracting recently uploaded and updated latest data temporally and regionally and analyzing the extracted data.

In addition, in the preference evaluation method and system according to the embodiment of the present disclosure having various technical features as described above, the validity of the preference and influence evaluation results may be checked and the validity may be displayed as the result map such that a user may clearly and easily recognize more accurate result data derived from the result map, thereby further improving the user's reliability and satisfaction.

In addition to the effects as described above, specific effects in accordance with the present disclosure will be described together with the detailed description for carrying out the disclosure.

**BRIEF DESCRIPTION OF DRAWINGS**

FIG. 1 is a block diagram showing a preference evaluation system according to an embodiment of the present disclosure.

FIG. 2 is a schematic diagram showing a preference evaluation server shown in FIG. 1.

FIG. 3 is a diagram showing a preference evaluation result by the preference evaluation server using a three-dimensional modelled graph.

FIG. 4 is a graph showing a preference evaluation result map by the preference evaluation server.

FIG. 5 shows a preference evaluation result map by the preference evaluation server based on a time zone.

**DETAILED DESCRIPTIONS**

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

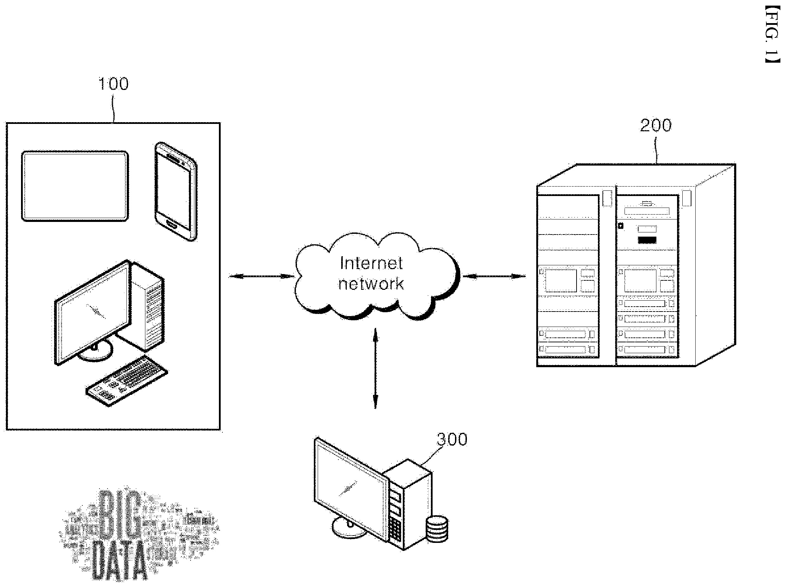

FIG. 1 is a block diagram showing a preference evaluation system according to an embodiment of the present disclosure.

The preference evaluation system shown in FIG. 1 includes a communication device 100 used by a consumer, an evaluation server 200 for creating preference evaluation result data and an evaluation result map, and an user device 300 for checking the preference evaluation result.

Specifically, the communication device 100 may include a personal computer, a laptop, a smart phone, and a tablet mobile communication device as used by a consumer. Accordingly, preference survey targets, for example, consumers may selectively access various social network services (SNS) sites such as Twitter, Facebook, Instagram, and blogs using the communication device 100 and may upload various posted contents such as writings, photos, and videos to the corresponding SNS site.

The evaluation server 200 may detect, through the Internet network, big data built in a database server running an Internet portal site together with the posted data included in various posted contents of the SNS as uploaded by the consumers using the communication device 100. The evaluation server 200 may analyze API data (Application Programming Interface Data) and text data of the various posted data and the big data, thereby to create preference evaluation result data. Then, the evaluation server 200 may create an evaluation result map based on the preference evaluation result data.

A reason why the evaluation server 200 analyzes the big data built in the database server running an Internet portal site together with the posted data included in various posted contents of the SNS as uploaded by the consumers to create the preference evaluation result data it that a use frequency of use of such data by consumers is high. In addition, the posted data and databases created through the SNS and Internet portal sites may be easily accessed and shared by the consumers through social networking. Further, in the SNS site, interactive posted data may be widely created, and thus temporal and regional characteristics may be easily detected therefrom, and the consumers may be identified using accounts. To take advantage of these advantages, the evaluation server 200 in accordance with the present disclosure analyzes the API data and text data of the big data and the posted data of the SNS and Internet portal sites as uploaded by the consumers using the communication device 100 to create the preference evaluation result data. The created preference evaluation result data may be shared by the user device 300 or the communication device 100 through an application program (or an Internet site).

The user device 300 may allow a specific administrator or user to access the application program (or Internet site) running on the evaluation server 200 through the Internet network. Thus, the user device 300 may include personal computers, notebooks, smart phones, and tablet mobile communication devices. The user device 300 may allow the user or the administrator to access the application program running on the evaluation server 200 and then to download the preference evaluation result data and the evaluation result map and to check the downloaded preference evaluation result data and the evaluation result map on a display unit.

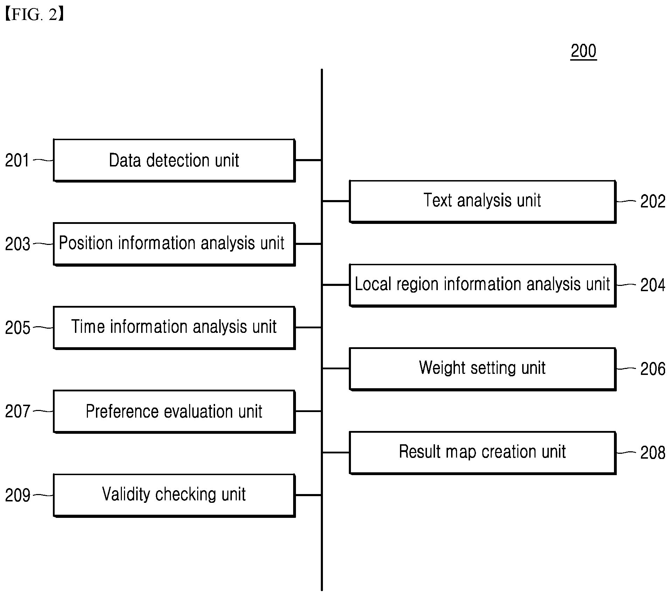

FIG. 2 is a schematic diagram showing the preference evaluation server shown in FIG. 1.

The evaluation server 200 shown in FIG. 2 may include a data detection unit 201, a text analysis unit 202, a position information analysis unit 203, a local region information analysis unit 204, a time information analysis unit 205, a weight setting unit 206, a preference evaluation unit 207, a result map creation unit 208, and a validity checking unit 209.

Specifically, the data detection unit 201 searches for posted contents of various SNSs, such as Twitter, Facebook, Instagram, and blogs, and big data built in database servers running Internet portal sites through the Internet network. Thus, the data detection unit 201 detects in real time posted data related to a preset object (e.g., a specific object such as a brand, a product, or a person).

When detecting the posted data, the data detection unit 201 may match the preset object, that is, the brand, the product, or the person with a term related thereto (a name, a trade name, a brand name, a hash tag, etc.). Further, the data detection unit 201 refers to user profile and position information of the consumers and then searches for and detects, in real time, access information on position data, and access information on social connection data including the number of subscribers, followers, and friends associated with the corresponding consumers.

The text analysis unit 202 sequentially extracts the API data (Application Programming Interface Data) and the text data from the posted data and the access information detected in real time by the data detection unit 201.

The text analysis unit 202 may classify the detected text data into a text related to time information, a text related to local region and position information, a text related to a social network, and a term referring to a corresponding object, based on a preset hash tag and database list. The text analysis unit 202 may sort and store the API data and the text data about the corresponding object in accordance with a preset and classified text list (a list of a time-related text and a position-related text).

The position information analysis unit 203 analyzes the API data and text data sorted based on the list, and then extracts local region and position-related information based on the analysis result.

When extracting the local region and position-related information, the position information analysis unit 203 may combine a term referring to a local region or a position, a position reference term, position data (latitude and longitude), a region name included in profile information, and region name-related term included in posted contents and profile information of other consumers connected to the corresponding consumer via followers and then extract the local region and position-related information based on the combinations. The local region (or a region name) related information related to the corresponding consumer may be sorted and stored based on an occurrence frequency thereof.

Further, the position information analysis unit 203 may use a geocoding algorithm and a library program of Python (an unicode character and a geocoding library supported by GeoPy) to detect position data including coordinate information based on the position information and region name indicated in the user profile. Then, the position information analysis unit 203 may extract the local region (or region name) and position-related information based on the detected coordinate information, and may sort and store the extracted local region and position-related information according to a frequency at which the information is extracted.

Further, the position information analysis unit 203 may extract the local region and position information related to the corresponding object using an inference program according to Backstrom, Sun, and Marlow (2010). In an approach presented by the inference program according to Backstrom, Sun, and Marlow (2010), a position with the largest number of friends, that is, a position with the greatest influence is assigned to the object. Thus, when an account of the corresponding object is not disclosed, the local region and position information related to the corresponding object may be confirmed.

The local region information analysis unit 204 may sort and store the API data and text data extracted from the text analysis unit 202 based on each of lists of object-based local region (or region name) and position information sorted and arranged by the position information analysis unit 203. Accordingly, the API data and text data classified on an object basis may be classified based on each of the lists of the searched object-based local region, region name, and position information.

The time information analysis unit 205 may analyze each of API data and text data extracted from the text analysis unit 202 and may extracts date and time-related information based on the analysis result. Further, the time information analysis unit 205 may use the extracted date and time-related information to classify and rearrange and store the API data and text data extracted from the text analysis unit 202 based on a time-zone.

The weight setting unit 206 tracks and analyzes the API data and text data classified based on each of the lists of the local region (or region name) and position information, and the API data and text data rearranged based on the date and time zone, respectively and adds each weight to each API data and text data based on the tracking and analyzing results.

Specifically, the weight setting unit 206 may analyze the number of friends associated with a creator of each of posted contents associated with the API data and text data classified based on each of the lists of the local region (or region name) and position information, the number of followers of the creator, the number of recommendations of the posted contents, and the number of Likes thereof, etc. Then, the weight setting unit 206 may add, to the corresponding API data and text data, a weight calculated based on the number of the friends, the number of followers of the creator, the number of recommendations of the posted contents, and the number of Likes thereof, etc. In this connection, the added weight may be considered in the influence evaluation of each object and the post creator associated with the corresponding API data and text data.

Further, the weight setting unit 206 may analyze the number of friends associated with a creator of each of posted contents associated the API data and text data rearranged based on the date and time zone, the number of followers of the creator, the number of recommendations of the posted contents, and the number of Likes thereof, etc. Then, the weight setting unit 206 may add, to the corresponding API data and text data, a weight calculated based on the number of the friends, the number of followers of the creator, the number of recommendations of the posted contents, and the number of Likes thereof, etc. In this connection, the added weight may be considered in the influence evaluation of each object and the post creator associated with the corresponding API data and text data.

The preference evaluation unit 207 evaluates a preference and an influence of each object and each post creator associated with the corresponding API data and text data using the weighted API data and text data. Hereinafter, the preference and influence evaluation method by the preference evaluation unit 207 will be described in more detail.

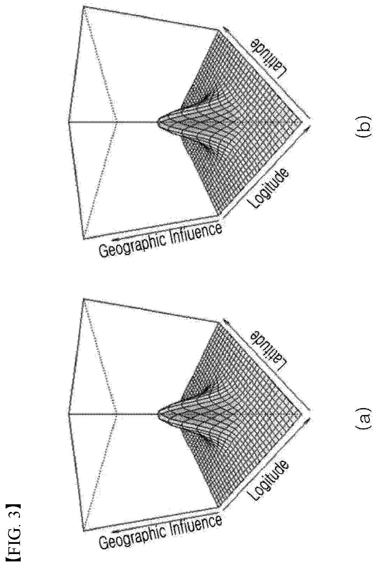

FIG. 3 is a diagram showing the preference evaluation result by the preference evaluation server using a three-dimensional modelled graph.

Referring to FIG. 3, the preference evaluation unit 207 models a weight size and a weight distribution of the API data and text data classified based on each of the lists of the local region (or region name) and position information on Gaussian spatial coordinates. Thus, a regional influence may be evaluated based on a position-based height and a curve shape thereof.

In general, in a Gaussian distribution, a maximum influence is allocated to a center of a source position of position information. Accordingly, a dispersion of a Gaussian curve around the center represents the weight distribution of the corresponding object or a creator of the corresponding posted contents. The Gaussian curve decreases algebraically as it moves away from the center, Thus, the temporal and geographical influences may decrease exponentially as a distance from the center of the source increases.

As shown in (a) of FIG. 3, it may be determined that a corresponding object or a creator of corresponding posted contents having the number of followers, the number of friends, the number of recommendations, and the number of likes relatively smaller than an average value has a lower regional influence.

On the contrary, as shown in (b) of FIG. 3, it may be determined that a corresponding object or a creator of corresponding posted contents having the number of followers, the number of friends, the number of recommendations, and the number of likes relatively larger than an average value has a higher regional influence.

Geographical influence should take into account a temporal variation.

Accordingly, the preference evaluation unit 207 may monitor the temporal variation of the regional influence evaluation result of the API data and text data using a following Equation 1.

[Equation 1]

$$g_{it} = k \cdot log(followers_{it} + 2)$$

where the geographical influence of the writing creator or the corresponding object (i) at a time (t) has a multivariate Gaussian distribution having an average 0 and a variance $\Sigma_{it}$. *follower* $s_{it}$ refers to at least one of the number of followers, the number of friends, the number of recommendations, and the number of likes of the writing creator or the corresponding object (i) at the time (t). Further, k is a constant.

For example, the writing creator having one follower has a regional influence having an average 0 and a variance of log 1 (Li et al. 2012; Lilien, Kotler, and Moorthy 1995). Therefore, 2 may be added to the number of followers to avoid data loss during calculation. Therefore, the regional influence of the corresponding writing creator is weighted based on the number of followers. The regional influence of an object in a low-density region may increase because followers and friends are distributed in a larger area in the low-density region. Further, it may be predictable that an object has fewer friends and a level of SNS activity is low in the low-density local region. Accordingly, in order to correct a bias of a population size, the regional influence of each object may be normalized with the corresponding population and the geographical influence (git) may be calculated using the above Equation 1.

When the number of followers or friends or recommendations related to a specific writing creator or a specific object is absent, the regional influence thereof may be $k \cdot log(2)$. Thus, similarly, when a specific writing creator uploads a post (r) at a time (t), the number of followers (i), friends, or recommendations related thereto may vary. Then, a following Equation 2 may be established.

[Equation 2]

$$g_{rt} = k \cdot log(followers_{rt} + 2)$$

In this connection, *followers*$_{rt}$ may refer to the number of followers or friends of the creator of the post (r) at the time (t).

In one example, the preference evaluation unit 207 may apply a weight size and a weight distribution of the API data and text data classified based on each of the lists of the local region (or region name) and position information to a following Equation 3 to calculate a preference ($w_r$) of the corresponding creator or object. The preference of the post (r) may be evaluated as the preference ($w_r$) of the creator or the object associated with the corresponding post (r).

[Equation 3]

$$w_r = f(r|x)g_r$$

In this connection, $f(r|x)$ refers to ab emotional score of the post creator or the object. $g_r$ refers to a weight of the post (r).

In one example, the preference evaluation unit 207 may apply the preference ($w_r$) calculation result to spatial coordinates defined using a longitude and a latitude using a following Equation 4 to extract an regional preference ($w_r$) evaluation result.

[Equation 4]

$$w_i = \begin{cases} f(i|x)g_i & if\ i \in i_r \\ 0 & if\ i \notin i_r \end{cases}$$

In this connection, gi refers to point information of a space defined using the latitude and the longitude. $i_r$ represents a point of the post (r).

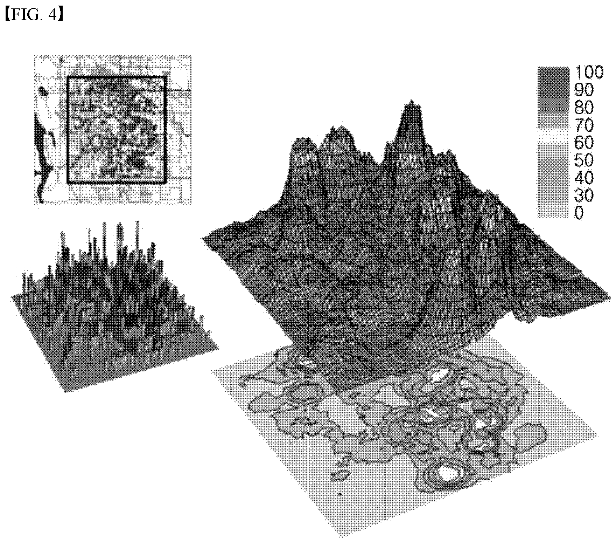

The result map creation unit 208 may arrange the weighted API data and text data based on a local region and a time-zone to create a preference evaluation result map. The preference evaluation result map may be analyzed and created by performing a preset 5-steps process. This will be described in detail referring to FIG. 4.

FIG. 4 is a graph showing the preference evaluation result map from the preference evaluation server.

Referring to FIG. 4, the result map creation unit 208 allocates coordinate information of a map onto which the point information (gi) of the map defined using the latitude and the longitude is placed. Then, the result map creation unit 208 reads the preference ($w_r$) of the creator or the object as calculated based on the above Equation 3 and calculates an experience density (e.g., a kernel density) of the corresponding preference or weight. The experience density may be calculated using a following Equation 5. In this connection, an edge correction ($e(P_i)$) and an optimal bandwidth (h) may be set.

[Equation 5]

$$F(c) = \sum_{i=1}^{n} K(p_i - c)e(p_i)w_i$$

In this connection, K refers to a Gaussian kernel.

Subsequently, the result map creation unit 208 matches the experience density (kernel density) of the preference ($w_r$) and weight of the creator or object with the assigned coordinate information and combines the matching results.

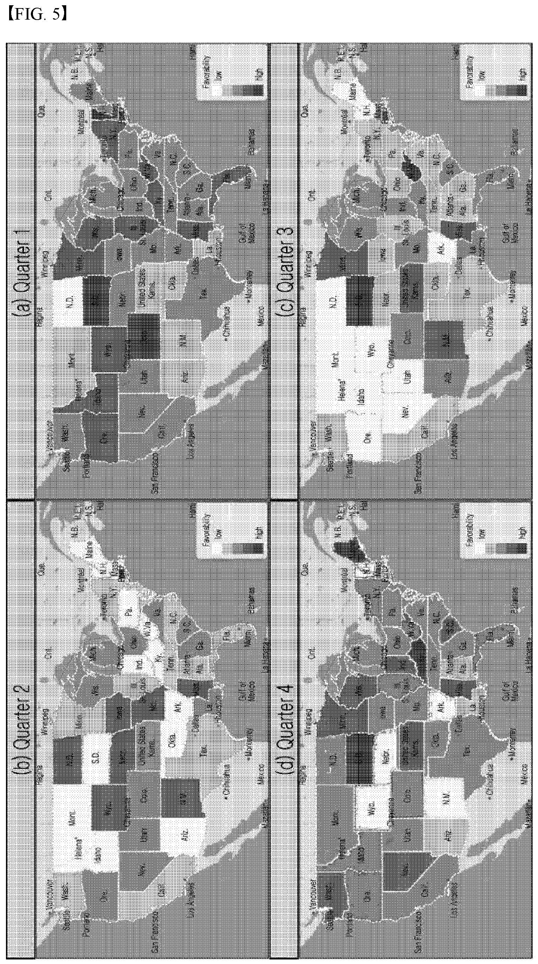

FIG. 5 shows a preference evaluation result map by the preference evaluation server based on a time zone.

As shown in FIG. 5, the preference and influence of the specific object or specific politician evaluated based on a position may vary as a season (quarter in FIG. 5) changes. Thus, the preference thereof may be tracked based on the seasonal variation, that is, the temporal variation.

In particular, when visually presenting the preference extraction result information based on a specific local region (for example, based on a specific state in the United States), the user may identify the preference based on a specific local region and based on a specific time or season.

In one example, the validity checking unit 209 may identify consumption or sales of a preset object based on a local region and a time-zone and then may compare the identified consumption or sales with the preference evaluation result of the object to verify the validity of the preference evaluation result. Further, the validity verification result may be shared by the user device 300 or the communication device 100 through an application program (or an Internet site).

The preference evaluation method and system according to the embodiment of the present disclosure having various technical features as described above may enable evaluation and tracking of the preference and the influence of the specific object such as a brand, a product, or a person temporally and regionally, thereby to overcome various limitations and improve evaluation accuracy and reliability thereof.

Further, in the preference evaluation method and system according to the embodiment of the present disclosure having various technical features as described above, the data about various posted contents are detected through the various social network services (SNSs) such as Twitter and, a weight is imparted to temporal and regional analysis characteristics thereof in the evaluation of the preference and the influence of a corresponding object. Accordingly, more accurate analysis results may be achieved by extracting recently uploaded and updated latest data temporally and regionally and analyzing the extracted data.

In addition, in the preference evaluation method and system according to the embodiment of the present disclosure having various technical features as described above, the validity of the preference and influence evaluation results may be checked and the validity may be displayed as the result map such that a user may clearly and easily recognize more accurate result data derived from the result map, thereby further improving the user's reliability and satisfaction.

It should be understood that the above-described embodiments are illustrative in all respects and not restrictive. The scope of the present disclosure will be indicated by the claims below, rather than the detailed description above. It should be interpreted that the meaning and scope of the claims to be described later, as well as all variations and modification derived from the equivalent concept thereof are included in the scope of the present disclosure.

## Claims

1. A preference evaluation method comprising:

detecting and analyzing, by an evaluation server, posted contents uploaded to a social network service (SNS) site through a communication device, and big data built in a database server of an Internet site, and creating, by the evaluation server, preference evaluation result data and an evaluation result map, based on the detecting and analyzing results; and
downloading, by an user device, the preference evaluation result data and the evaluation result map from the evaluation server, through an Internet network, such that a user of the user device checks the preference evaluation result data and the evaluation result map on a display of the user device.

2. The preference evaluation method of claim 1, wherein detecting and analyzing the posted contents and the big data and creating the preference evaluation result data include:

searching, by a data detection unit of the evaluation server, for the posted contents and the big data through the Internet network, and detecting, by the data detection unit, posted data on a predetermined object, wherein the object includes at least one of a brand, a product, or a person;
extracting, by a text analysis unit of the evaluation server, application programming interface data (API data) and text data of the detected posted data;
analyzing, by a position information analysis unit of the evaluation server, the extracted API data and text data and, extracting position-related information therefrom;
using, by a local region information analysis unit of the evaluation server, the position-related information to classify the extracted API data based on a local region;
analyzing, by a time information analysis unit of the evaluation server, the extracted API data and text data to extract date and time-related information;
using, by the time information analysis unit, the date and time-related information to classify the extracted API data and text data based on a time-zone;
analyzing, by a weight setting unit of the evaluation server, the API data and text data classified based on the local region and based on the time-zone to obtain a weight corresponding thereto, and applying the obtained weight to the corresponding API data and text data; and
evaluating, by a preference evaluation unit of the evaluation server, a preference and a influence of the object based on the weighed API data and text data.

**3.** The preference evaluation method of claim 2, wherein creating the evaluation result map includes:

arranging, by a result map creation unit of the evaluation server, the weighted API data and text data, based on the local region and the time-zone; and
identifying, by a validity checking unit of the evaluation server, consumption or sales of the object based on the local region and the time-zone, and comparing the identified consumption or sales with the preference evaluation result of the object, and verifying a validity of the preference evaluation result based on the comparison result.

**4.** The preference evaluation method of claim 2, wherein classifying the extracted API data and text data based on the time-zone includes using the date and time-related information to rearrange the extracted API data and text data based on the time-zone, and storing the rearranged API data and text data.

**5.** The preference evaluation method of claim 2, wherein evaluating the preference and the influence of the object includes:

modeling a weight size and a weight distribution of the API data and text data classified based on the local region and position information on Gaussian space coordinates;
determining and evaluating a regional influence of the object based on a position-based height and a curve shape modeled on the Gaussian spatial coordinates; and
monitoring a regional influence evaluation result of the API data and text data based on a temporal variation.

**6.** A preference evaluation system comprising:

an evaluation server configured to detect and analyze posted contents uploaded to a social network service (SNS) site through a communication device, and big data built in a database server of an Internet site, and to create preference evaluation result data and an evaluation result map, based on the detecting and analyzing results; and
an user device configured to download the preference evaluation result data and the evaluation result map from the evaluation server, through an Internet network, such that a user of the user device checks the preference evaluation result data and the evaluation result map on a display of the user device.

**7.** The preference evaluation system of claim 6, wherein the evaluation server includes:

a data detection unit configured to search for the posted contents and the big data through the Internet network, and to detect posted data on a predetermined object, wherein the object includes at least one of a brand, a product, or a person;
a text analysis unit configured to extract application programming interface data (API data) and text data of the detected posted data;
a position information analysis unit configured to analyze the extracted API data and text data and to extract position-related information therefrom;
a local region information analysis unit configured to use the position-related information to classify the extracted API data based on a local region;
a time information analysis unit configured to analyze the extracted API data and text data, to extract date and time-related information therefrom, and to use the date and time-related information to classify the extracted API data and text data based on a time-zone;
a weight setting unit configured to analyze the API data and text data classified based on the local region and based on the time-zone to obtain a weight corresponding thereto, and to apply the obtained weight to the corresponding API data and text data; and
a preference evaluation unit configured to evaluate a preference and a influence of the object based on the weighed API data and text data.

**8.** The preference evaluation system of claim 7, wherein the evaluation server further includes:

a result map creation unit configured to arrange the weighted API data and text data, based on the local region and the time-zone to create the preference evaluation result map; and
a validity checking unit configured to identify consumption or sales of the object based on the local region and the time-zone, to compare the identified consumption or sales with the preference evaluation result of the object, and to verify a validity of the preference evaluation result based on the comparison result.

**9.** The preference evaluation system of claim 7, wherein the position information analysis unit is configured to:

detect position data including coordinate information based on position information and a region name indicated in an user profile, using a geocoding algorithm and a library program of Python;
extract local region and position-related information based on the detected coordinate information;
sort the extracted local region and position-related information based on a frequency at which the information is extracted; and
store the sorted information.

10. The preference evaluation system of claim 7, wherein the weight setting unit is configured to:

analyze at least one of a number of friends associated with a creator of each of posted contents associated with the API data and text data classified based on the local region and position information, a number of followers of the creator, a number of recommendations of the posted contents, or a number of Likes thereof and then calculate a first weight based on the analysis result;
analyze at least one of a number of friends associated with a creator of each of posted contents associated with the API data and text data classified based on the date and time zone, a number of followers of the creator, a number of recommendations of the posted contents, or a number of Likes thereof and then calculate a second weight based on the analysis result;
add the first weight to the local region and position-based API data and text data; and
add the second weight to the date and time zone-based API data and text data.

【FIG. 1】

【FIG. 2】

200

Data detection unit — 201

Text analysis unit — 202

Position information analysis unit — 203

Local region information analysis unit — 204

Time information analysis unit — 205

Weight setting unit — 206

Preference evaluation unit — 207

Result map creation unit — 208

Validity checking unit — 209

【FIG. 3】

(a)                                    (b)

【FIG. 4】

【FIG. 5】

(a) Quarter 1

(b) Quarter 2

(c) Quarter 3

(d) Quarter 4